# EUROPEAN PATENT APPLICATION

(11) **EP 2 139 159 A1**
(43) Date of publication of application: **30.12.2009**
(21) Application number: 08305342.1
(22) Date of filing: 27.06.2008
(51) Int. Cl.: H04L 12/18, H04L 12/56

(54) **Method and device for managing multicast content distribution**

(71) Applicant: Thomson Licensing, 92100 Boulogne-Billancourt (FR)
(72) Inventor: Henry, Jean-Baptiste, 35520, MELESSE (FR); Houdaille, Rémi, 35510, CESSON SEVIGNE (FR)
(74) Representative: Ruellan-Lemonnier, Brigitte

(57) **Abstract**

The present invention concerns a receiver, a router device, and a method at a receiver (5) for receiving content from at least one source address (3), said receiver being connected to at least one router (1) that permits the receiver to connect to said at least one source address. to this end the method comprises the steps of receiving an indication (S1) that said content is distributed on a multicast address, from at least one source address, receiving an indication (S2) that said content is distributed on at least one port of said multicast address from at least one port of said at least one source address, selecting (S3) at least one port among said more than one port and reporting (S4) said selection to said at least one router.

## Description

### FIELD OF THE INVENTION

The present invention relates generally to the transmission of multimedia streams and in particular to an optimization of the bandwidth on the network.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Packet-based information transfer networks, such as the Internet, IP local area networks or the like, are characterized by several modes of transfer of the information. These modes are classified into three categories as a function of the number of senders and of receivers engaged in this transmission. Firstly, there is point-to-point transmission (also known as "unicast") which allows a sender to dispatch an information packet to a single receiver identified by its address on the network. This is the mode of sending used by the most popular protocols of the Internet network such as the Hyper Text Transfer Protocol, HTTP, or the File Transfer Protocol, FTP. Another mode of sending consists in a sender transmitting a packet in broadcast mode. In this mode, the packet sent by the sender is sent to all the nodes of the network. This mode is generally not available on the Internet but is found on local area networks. The third mode consists in a sender or group of senders transmitting a packet to a group of receivers, in a multipoint mode of sending (also known as "multicast"). In this mode the packets are sent to an address termed the multipoint transmission address and are forwarded to all the destinations belonging to the transmission group. A client who joins a transmission group is said to subscribe to the group and a client who leaves the group is said to unsubscribe from the group.

The multipoint transmission mode is used in practice to save intermediate bandwidth in the network when a source sends data to a group of destinations. When a client wishes to join a multipoint data transmission group, it subscribes to the multipoint transmission address, for example according to the Internet Group Management Protocol, IGMP. In particular, IGMP version 3, IGMPv3, is defined in RFC 3376 at the Internet Engineering Task Force, IETF. Following this subscription, the client is recognized as a member of the transmission group. The packets corresponding to a stream, and transmitted in multipoint mode, are routed from the Internet to this client.

The streams transmitted in multipoint mode may often be divided into several parts. This is, for example the case when using incremental coder also known as scalable codec. A detailed description of this coder may be found in the standard ISO/IEC 14496-2:1999/FDAM 4, Coding of audiovisual objects - Part 2: Visual, Streaming video profile, Fine granularity scalability or in the standard ISO/IEC JTC1/SC29/WG11, MPEG04/N6372 "Scalable Video Model V 1.0". Scalable codecs are envisaged inter alia by the standards MPEG-4. They have the particular feature of coding a digital service as several streams, comprising a base stream and multiple complementary streams. The base stream enables to reconstruct the service on the client, but in a degraded manner. For example it is possible to reconstruct a low-resolution video of the service. The decoding of the base stream and of the complementary streams allows the restitution of the service in its full quality. Non-incremental coders can also generate streams divisible into a base stream and complementary streams. It is for example possible to group the images as a function of their MPEG coding type (I, P or B) and to undertake temporal dimensioning.

This is also the case when video, audio, subtitle, teletext, application, and other components that were tied altogether into a Transport Stream layer are all transmitted in their own multicast channel.

In order to receive each component, a receiver has to join each multicast channel. The number of multicast addresses to manage may then become high at the transmitter, at the receiver and at the intermediate network devices. The receiver will also receive unwanted components, and the bandwidth may not be able to accommodate all the components.

### SUMMARY OF THE INVENTION

The present invention attempts to remedy at least some of the concerns connected with the management of a plurality of multicast addresses of the prior art, by providing a way to the end-to-end system to connect and forward specifically to multicast addresses and port, thus saving bandwidth and IP addresses.

The invention concerns a method at a receiver for receiving content from at least one source address, the receiver being connected to at least one router that permits the receiver to connect to the at least one source address.

To this end, the method comprises the steps of receiving an indication that the content is distributed on a multicast address, from at least one source address, receiving an indication that the content is distributed on at least one port of the multicast address from at least one port of the at least one source address, selecting at least one port among the more than one port and reporting the selection to the at least one router.

Advantageously, the receiver selects and receives required multicast content only. The multicast content is distributed on multiple ports, and the receiver selects some of the ports to receive related content. It does not receive any useless multicast content. The selection is indicated to a router that filters multicast traffic accordingly.

The multicast content may be distributed on multiple ports of a multicast address and the receiver selects some ports. The multicast content may be distributed on multiple ports of one or more source addresses and the receiver selects some ports per source address. Of course the receiver may select the ports of each source addresses and of the multicast address. The ports selected at each source address are not necessarily the same. The receiver may select different ports of each source address. It may also select a subset of the source addresses.

According to an embodiment the content is distributed at a multicast IP address and on more than one port of a transport protocol layer.

According to an embodiment, the step of reporting comprises the step of sending an IGMP Membership Report message.

The receiver uses an optional field of IGMP to indicate the selection to the router.

According to an embodiment, the IGMP Membership Report message comprises an Auxiliary Data field for indicating the ports to use.

The invention also relates to a receiver device for receiving content on a multicast address from at least one source address comprising communicating means for connecting to a router that permits the receiver to connect to the at least one source address, service managing means for receiving the content from at least one port of at least one source address, on at least one port of the multicast address, and multicast managing means for selecting at least one source address and at least one port among the more than one port and reporting the selection to the router.

Another object of the invention is a routing device, comprising receiving means for receiving content distributed on a multicast address, from at least one port of at least one source address, on at least one port of the multicast address, controlling means for receiving an indication, from a receiver of the content, of a selection of at least one source address and at least one port among the more than one port, and routing means for filtering the content according to the selection and forwarding the filtered content to the receiver.

Another object of the invention is a computer program product comprising program code instructions for executing the steps of the process according to the invention, when that program is executed on a computer. By "computer program product", it is meant a computer program support, which may consist not only in a storing space containing the program, such as a diskette or a cassette, but also in a signal, such as an electrical or optical signal.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is a block diagram of a system and objects compliant with the embodiment;
- Figure 2 represents an IGMPv3 Membership Report message;
- Figure 3 represents the internal format of a Group Record;
- Figure 4 represents an Auxiliary Data field according to the embodiment;
- Figure 5 represents another Auxiliary Data field according to the embodiment;
- Figure 6 is a flow diagram illustrating an example of the transmission of IGMP messages according to the embodiment; and
- Figure 7 is a flow chart describing a filtering method at the router.

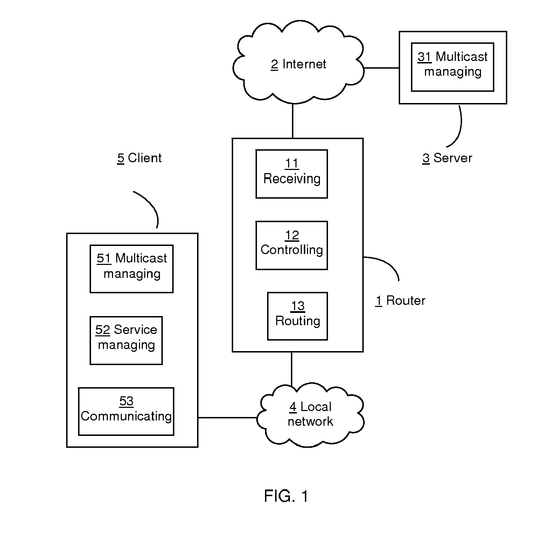

In Figure 1, the represented blocks are purely functional entities, which do not necessarily correspond to physically separate entities. Namely, they could be developed in the form of hardware or software, or be implemented in one or several integrated circuits.

### DETAILED DESCRIPTION OF PREFERRED EMBODIMENTS

The exemplary embodiment comes within the framework of multicast distribution to a client connected to the Internet through a digital subscriber line, but the invention is not limited to this particular environment and may be applied within any other frameworks where a client manages multicast connections.

The system according to the embodiment is represented in figure 1. It comprises a router 1 connected to the Internet network 2 and to a first network 4. A server 3 is connected to the Internet network 2. A client 5 is connected to the first network 4 and accesses the server. Only one client is represented but of course more than one client on the first network could access the server. According to the embodiment, the first network is a local area network of Ethernet type. Of course it could be a local area network of any type. It is connected to the Internet through a broadband connection such as a digital subscriber line. A gateway, not represented connects the first network to a DSLAM. According to the embodiment, the router 1 is embedded in the DSLAM. Of course the first network could be connected to the Internet through any other well known technique, and the router would be embedded into a network equipment between the server and the first network. The first network might also be an access network, such as a cellular access network. More generally, the embodiment applies to any device that registers to multicast sessions with IGMP. The Internet network of the embodiment might be any network type that permits to connect a server to a router.

The router comprises a receiving module 11 for receiving multicast content on multiple ports, from multiple ports of multiple source addresses. The router also comprises a controlling module 12 for receiving indication from a receiver of a selection of source addresses, ports of the source addresses and ports of a multicast address. The router comprises a routing module 13 for filtering the content it receives from the multiple sources. It filters content according to the selection it has received from the receiver. The router forwards the content according to the filtering rules.

According to the embodiment, the server transmits content on streams that are divided into multiple parts that correspond to a base stream and multiple complementary streams as specified in scalable coding. These multiple parts are sent on the same multicast address, each one on a different port. This distribution mode is called multiple port multicast hereinafter.

According to the embodiment, the client device is an IP set-top box that is compliant with the DVB IPTV standard: "ETSI TS 102 034, Transport of MPEG 2 Transport Stream (TS) Based DVB Services over IP Based Networks". It comprises a service managing module 51 that performs the functions of an SD&S client, according to that standard, and in particular the Service Discovery section. It comprises a communicating module 53 that is adapted to receive multicast streams according to the multiple port multicast distribution; it receives the streams on a same multicast address and each on a different port.

The client comprises a multicast managing module 52 that is adapted to perform port selection; when receiving multicast streams on multiple ports, it selects some ports to receive some parts only of the streams. For example, the client may select a base stream and a first complementary stream among multiple complementary streams. In particular, the multicast managing module performs the IGMP functions, and the port selection as described hereinafter. The multicast managing module also performs the detection of the multiple port multicast distribution mode.

The server 3 is compliant with the DVB IPTV standards. It comprises, in particular, a multicast managing module 31 that is adapted to administer the multicast addresses assigned to the service. It assigns multicast addresses to services, up to the port numbers, and informs the clients on the assignment using SD&S. Of course, the server may not systematically use the multiple port multicast distribution mode.

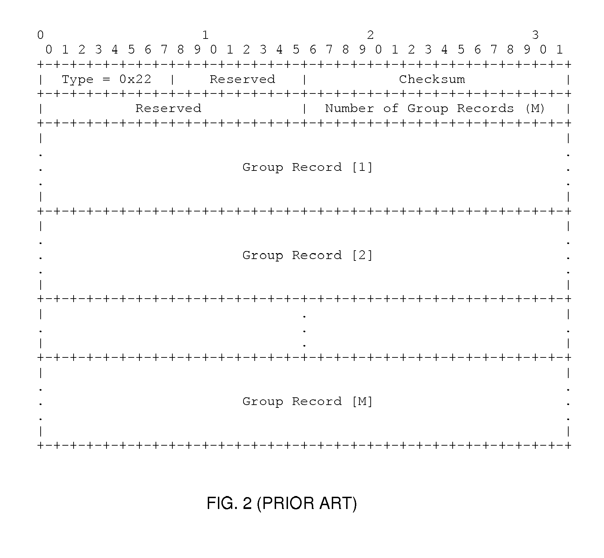

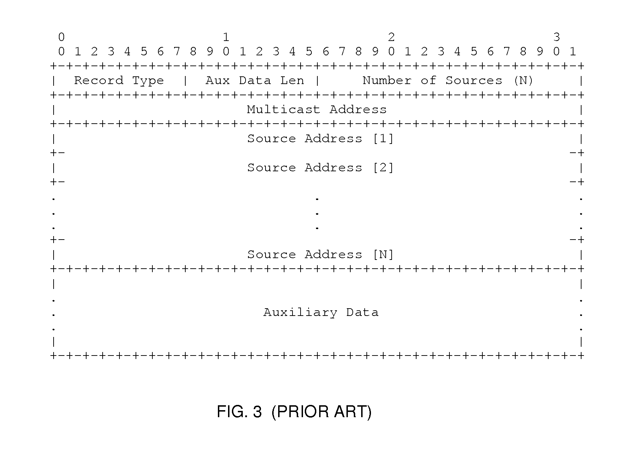

In the embodiment, the membership management of multicast groups is performed according to the IGMPv3 protocol that allows specifying source addresses for the multicast stream. Figure 2 represents an IGMPv3 Membership Report message specified in RFC 3376. It is used by IP systems to report (to neighboring routers) the current multicast reception state, or changes in the multicast reception state, of their interfaces. It is used to join or leave multicast group. The Membership Report message contains Group Record fields, as represented in figure 3. The Group Record Type field specifies the action on the specific group. There are six possibilities:
- 0x01: MODE_IS_INCLUDE specifies the source address that is of interest concerning the specified multicast address.
- 0x02: MODE_IS_EXCLUDE specifies the source address that is to be blocked concerning the specified multicast address.
- 0x03: CHANGE_TO_INCLUDE_MODE indicates that the filter has changed from exclude mode to include mode.
- 0x04: CHANGE_TO_EXCLUDE_MODE indicates that the filter has changed from include mode to exclude mode.
- 0x05: ALLOW_NEW_SOURCES Add sources to a previous communicated list.
- 0x06: BLOCK_OLD_SOURCES remove sources from a previously communicated list.

The first two types are replies to Membership Query messages and are included in Membership Report messages. The other four types are spontaneous messages due to socket programming changes in the host.

To join a group, a device sends a CHANGE_TO_INCLUDE_MODE with a specific set of source addresses. The receiver may also send a CHANGE_TO_EXCLUDE_MODE with no address; which means that any address is allowed.

To leave a group, the host has to send a CHANGE_TO_INCLUDE_MODE with no address. It may also send a BLOCK_OLD_SOURCES in case it was previously in INCLUDE mode with some source address specified, or other combinations of CHANGE and ALLOW or BLOCK, depending on the specific type of filter that was set.

It is possible to send a leave and a join within the same message. This message will have a BLOCK_OLD_SOURCES for the old group, and a CHANGE_TO_EXCLUDE_MODE for the new group, for example. The IGMP version 3 Membership Report messages are sent to the multicast address 224.0.0.22.

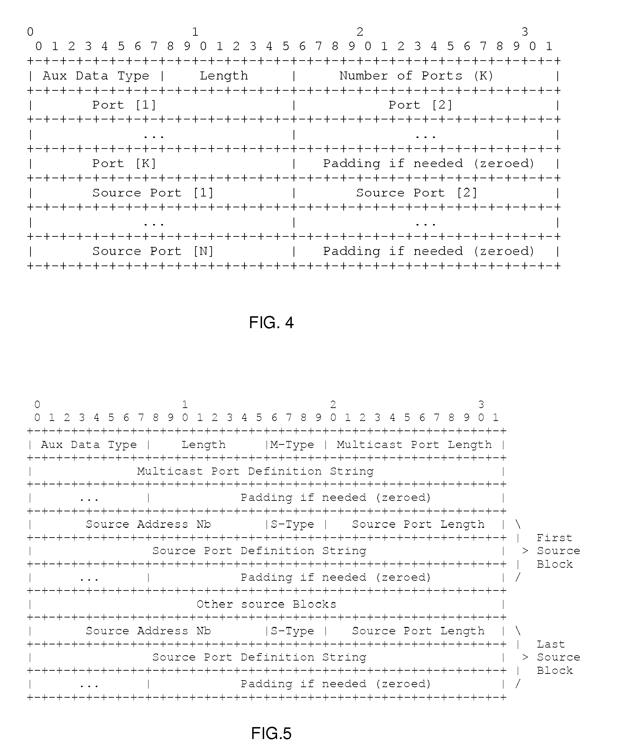

According to IGMPv3, a Group Record comprises an Auxiliary Data field that may contain additional information pertaining to this Group Record. According to the embodiment, the Auxiliary Data field contains information that is indicated in figure 4. The Aux Data Type field specifies that this Auxiliary Data field is used for port information. The field is set to the value 0x01. The Length field is in number of 32 bits words, including the Aux Data Type and Length fields. The Length field allows having other Auxiliary Data fields in this packet, after this one. The total length of the Auxiliary Data is provided by the Aux Data Len field in the Group Record header. The Auxiliary Data field indicates the number of ports for the Multicast group that are concerned by the IGMP message; Port [1] to Port [K]. The ports of the source can also be provided for each source sending packets on the multicast channel; Source Port [1] to Source Port [N]. When a port is not defined, its value is zeroed.

Figure 5 represents a variant Auxiliary data field of the IGMP Group Record messages MODE_IS_INCLUDE and MODE_IS_EXCLUDE. The Aux Data Type field specifies that this Auxiliary Data field is used for port information. The Length field allows having other Auxiliary Data fields in this packet, after this one. The total length of the Auxiliary Data is provided by the Aux Data Len field in the Group Record header presented above.

The ports for the destination multicast addresses are defined as follows:
- The M-Type field indicates if the listed ports are to be included or excluded from the accepted port list. It is set to the value 0x00 for INCLUDE and 0x01 for EXCLUDE.
- The Multicast Port Length specifies the length of the Multicast Port Definition String field in bytes, without the padding. The padding terminates the 32 bits word.
- The Multicast Port Definition String field is a string list of the ports. It is encoded in UTF-8, the 8-bit Unicode Transformation Format, with numeric values only, plus ',' and '-' as separators :

- ',' separates port values;
- '-' define range of ports between two included ports values.

For some Source Address the source ports to include or exclude are defined as follows:
- The Source Address Nb refers to the Source Address [i] in the Group Record, starting at 0;
- The S-Type, Source Port Length and Source Port Definition String fields have the same meaning as the M-Type, Multicast Port Length and Multicast Port Definition String fields of the destination Multicast Address.

The Auxiliary Data field indicated in figure 4 allows a single source port per source address in INCLUDE or EXCLUDE; i.e. the port mode follows the multicast mode. The Auxiliary Data field indicated in figure 5 allows several source ports per source address in INCLUDE and/or EXCLUDE port mode for INCLUDE and/or EXCLUDE multicast mode.

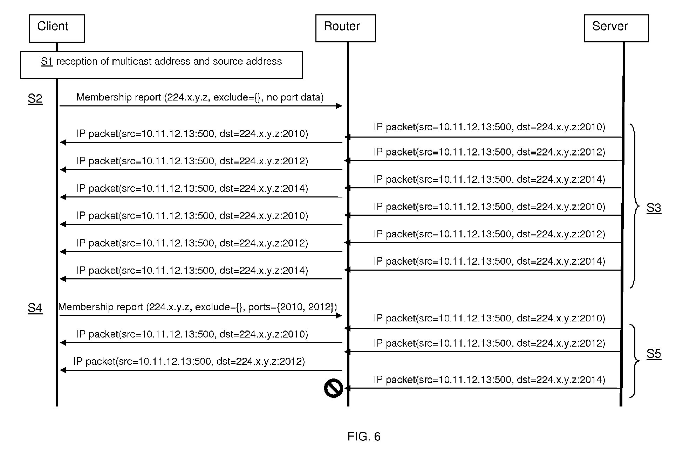

Figure 6 is a flow diagram illustrating an example of the transmission of IGMP messages according to the embodiment. Packets are sent between the client, the router and a server on the network. The server has a source address 10.11.12.13.

The client has received information on the services available, and the addresses at which they are available, at step S1. Here it has received information that the service is available at the multicast address 224.x.y.z, from a source address 10.11.12.14 on port number 500.

As step S2, the client requests the reception of all the packets from a source address 10.11.12.13 on the multicast address 224.x.y.z. At step S3, packets are received on ports number 2010, 2012 and 2014. This enables the client to detect that the multiple port multicast distribution mode is used. In the meantime, the client selects the ports on which it wants to receive the content. Of course, instead of receiving the multicast packets on all the ports prior to selecting, the client might receive an indication on the multicast ports that are used. This would enable the client to indicate the selection before receiving the multicast packets.

At step S4, the client sends a Membership Report message to indicate that it wants to receive packets on ports number 2010 and 2012, and it does not want to receive packets on port number 2014. The Membership Report message is received at the router.

At step S5, the router performs packets filtering. The packets with port number 2014 are not transmitted to the client.

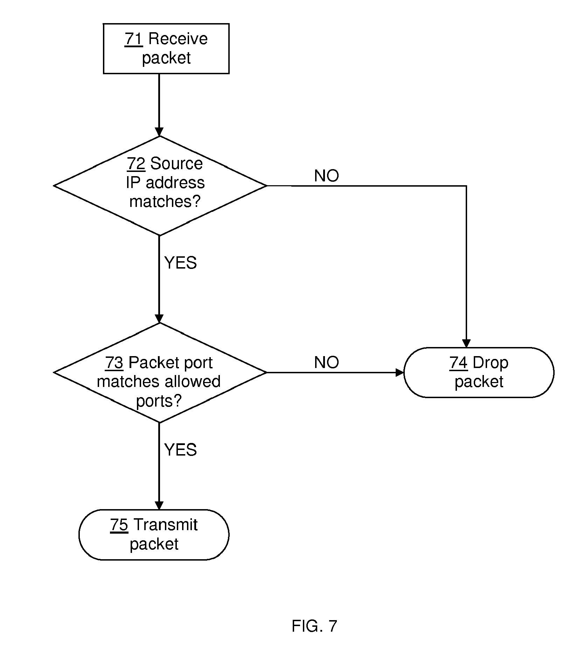

Figure 7 is a flow chart describing the method for filtering at the router. The router filters the incoming packets based on the source IP address and the destination port. The router receives the Membership Report message from the client, where the client indicates the ports on which it wants to receive the streams. The router routes the packets accordingly.

When the router receives a packet at step 71, it first checks the source IP address, 72. If it doesn't match any IP address requested by a client, the packet is dropped, 74. If it matches a requested IP address, the router then checks the port number, 73. The router then transmits the packet to the clients that requested to receive packet with such port number, 75.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. A method at a receiver (5) for receiving content from at least one source address (3), said receiver being connected to at least one router (1) that permits the receiver to connect to said at least one source address, comprising the steps of:
- receiving an indication (S1) that said content is distributed on a multicast address, from at least one source address;
- receiving an indication (S2) that said content is distributed on at least one port of said multicast address from at least one port of said at least one source address;
- selecting (S3) at least one port among said more than one port; and
- reporting (S4) said selection to said at least one router.

2. Method according to claim 1, **characterized in that** said content is distributed at a multicast IP address and on more than one port of a transport protocol layer.

3. Method according to claim 1 or 2, **characterized in that** the step of reporting comprises the step of sending an IGMP Membership Report message.

4. Method according any one of the claims 1 to 3, **characterized in that** the IGMP Membership Report message comprises an Auxiliary Data field for indicating the ports to use.

5. Computer program product, **characterized in that** it comprises program code instructions for executing the steps of the method according to claims 1 to 5 when said program is executed on a computer.

6. Receiver device (5) for receiving content on a multicast address from at least one source address (3) comprising:
- communicating means (53) for connecting to a router (2) that permits the receiver to connect to said at least one source address;
- service managing means (52) for receiving said content from at least one port of at least one source address, on at least one port of said multicast address; and
- multicast managing means (51) for selecting at least one source address and at least one port among said more than one port and reporting said selection to said router.

7. Routing device (1), **characterized in that** it comprises
- receiving means (11) for receiving content distributed on a multicast address, from at least one port of at least one source address, on at least one port of said multicast address,
- controlling means (12) for receiving an indication, from a receiver of said content, of a selection of at least one source address and at least one port among said more than one port; and
- routing means (13) for filtering said content according to the selection and forwarding said filtered content to said receiver.
